# EUROPEAN PATENT SPECIFICATION

(11) **EP 2 944 463 B1**
(45) Date of publication and mention of the grant of the patent: **05.07.2017**
(21) Application number: 14738136.2
(22) Date of filing: 09.01.2014
(51) Int. Cl.: B32B 27/30, B32B 27/00, B32B 27/36, C08J 7/04

(54) **MOLD RELEASE FILM AND PRODUCTION METHOD FOR SAME**
FORMTRENNFILM UND HERSTELLUNGSVERFAHREN DAFÜR
FILM DE DÉMOULAGE, ET PROCÉDÉ DE FABRICATION DE CELUI-CI

(30) Priority: 11.01.2013 JP 2013003027
(43) Date of publication of application: 18.11.2015
(73) Proprietor: Unitika, Ltd., Amagasaki-shi, Hyogo 660-0824 (JP)
(72) Inventor: ARAKI Goro, Kyoto 611-0021 (JP)
(74) Representative: Vigand, Philippe
(86) International application number: PCT/JP2014/050173
(87) International publication number: WO 2014/109340

(56) References cited:
- EP-A1- 2 179 844
- JP-A- 2002 020 516
- JP-A- 2005 146 080
- JP-A- 2008 302 547
- JP-A- 2011 020 419
- JP-A- 2011 127 236
- JP-A- 2012 020 429
- JP-A- 2012 144 021

## Description

### Technical Field

The present invention relates to a mold release film suitable as a mold release material.

### Background Art

Mold release films are widely used in industrial fields; examples of the specific applications of mold release films include: process materials for producing wiring boards such as printed wiring boards, flexible printed wiring boards and multilayer printed wiring boards; pressure-sensitive adhesive materials; protective materials for components of liquid crystal displays and the like; and molding materials for sheet shaped structures such as ion exchange membranes and ceramic green sheets.

Resins having mold releasability are generally expensive, and hence mold release films obtained by forming films from the resins having mold releasability themselves are expensive. Accordingly, there have been proposed many methods in each of which for the production of a mold release film, a film made of an inexpensive resin is used as a substrate film, and a resin layer having mold releasability is laminated on the surface of the substrate film by coating the surface of the substrate film with a resin having mold releasability. For the substrate film, polyester film, typified by polyethylene terephthalate film, having excellent mechanical properties, heat resistance and chemical resistance is used.

The method in which a resin layer is laminated on the surface of the substrate film by coating the surface of the substrate film with a resin having mold releasability is an effective method in terms of the thinning of the resin layer; for example, as methods using an aqueous mold release coating material, the methods laminating a silicone resin (Patent Literature 1 and Patent Literature 2), and the method laminating a fluorine-containing resin (Patent Literature 3) have been disclosed.

However, the resin layers in Patent Literature 1 and Patent Literature 2 are poor in the adhesiveness to the substrate; when an adherend is peeled off, these resins having mold releasability are transferred to the adherend, and unfortunately the functions of the adherend such as the pressure-sensitive adhesiveness of the adherend is degraded. The resin described in Patent Literature 3 is expensive, and is unfortunately hardly combustible and generates poisonous gases in the discarding by incineration after the use thereof. For uniform coating of a resin having mold releasability, unfortunately a large amount(s) of an organic solvent(s) is used.

On the other hand, Patent Literature 4 to Patent Literature 7 disclose resin layers including acid-modified polyolefin resins, as resin layers being low in possibility of contaminating adherends, having in combination smoothness and mold releasability, and not degrading workability.

The resin layers of Patent Literature 4 to Patent Literature 7 are excellent in the mold releasability with respect to acrylic adherends. However, the resin layers described in Patent Literature 4 to Patent Literature 7 are sometimes poor in the mold releasability with respect to other adherends, in particular rubber-based adherends, depending on the compositions of the resin layers; thus, the resin layers cannot be peeled off at all, or alternatively, even when the resin layers can be peeled off, the adherends are sometimes limited in the sense that, for example, no satisfactory surface of the adherends can be obtained because of unnecessary, unexpected patterns formed on the surface of the adherends after peeling off.

When the mold release films, in each of which a resin layer is provided on one surface of a polyester film, described in Patent Literature 4 to Patent Literature 7 are each wound in a form of a roll, the components of the resin layers migrate to the opposite surfaces to the surfaces each provided with the resin layer, and thus, the opposite surfaces are sometimes contaminated, depending on the compositions of the resin layers.

### Citation List

### Patent Literature

Patent Literature 1: JP07-196984A
Patent Literature 2: JP2005-125656A
Patent Literature 3: JP2004-114620A
Patent Literature 4: International Publication No. WO 2009/025063
Patent Literature 5: JP2011-20419A
Patent Literature 6: JP2012-20429A
Patent Literature 7: JP2012-144021A

### Summary of Invention

### Technical Problem

An object of the present invention is to provide, by solving such problems as described above, a mold release film including on one surface of a polyester film a resin layer including an acid-modified polyolefin resin, being satisfactory in the mold releasability with respect to a rubber-based adherend, and being free from the contamination of the opposite surface to the surface provided with the resin layer even when the mold release film is wound in a form of a roll.

### Solution to Problem

The present inventors made a diligent study for the purpose of solving such problems as described above, and consequently have reached the present invention by discovering that the above-described problems can be solved by allowing the processing of a mold release film to include: applying to a polyester film a liquid material for forming a resin layer; and drying, stretching and heat treating the polyester film including the liquid material applied to the polyester film.

Specifically, the gist of the present invention is as follows.
(1) A mold release film including a resin layer provided on one surface of a polyester film, wherein the resin layer includes an acid-modified polyolefin resin with a proportion of an acid-modifying component of 1 to 10% by mass, polyvinyl alcohol and a cross-linking agent; the content of polyvinyl alcohol exceeds 200 parts by mass and is 1000 parts by mass or less, and the content of the cross-linking agent is 1 to 20 parts by mass in relation to 100 parts by mass of the acid-modified polyolefin resin; and the peel force between the resin layer and a rubber-based adherend measured by bonding the rubber-based adherend to the resin layer is 0.5 N/cm or less.
(2) The mold release film according to (1), wherein the olefin component of the acid-modified polyolefin resin includes ethylene and/or propylene.
(3) The mold release film according to (1) or (2), wherein the contact angle of water on the opposite surface to the surface provided with the resin layer is 80° or less.
(4) A method for producing a mold release film, the production method being a method for producing the mold release film according to (1), and including: applying to a polyester film a liquid material including an acid-modified polyolefin resin with a proportion of an acid-modifying component of 1 to 10% by mass, polyvinyl alcohol, a cross-linking agent and a liquid medium, the content of polyvinyl alcohol exceeding 200 parts by mass and being 1000 parts by mass or less and the content of the cross-linking agent being 1 to 20 parts by mass in relation to 100 parts by mass of the acid-modified polyolefin resin; and drying, stretching and heat treating the polyester film including the liquid material applied to the polyester film.

### Advantageous Effects of Invention

The mold release film of the present invention is satisfactory in the mold releasability with respect to a rubber-based adherend, and is free from the contamination of the opposite surface to the surface provided with the resin layer even when the mold release film is wound in a form of a roll. Moreover, for developing mold releasability, the mold release film of the present invention does not require any mold release agent such as waxes, low molecular weight silicone compounds, and surfactants. Accordingly, the adherend is not contaminated during peeling off. The mold release film of the present invention does not require the use of a mold release agent including a halogen element such as fluorine, and hence results in a small environmental load when discarded.

The mold release film of the present invention is suitable for the process materials for producing printed wiring boards and the like; pressure-sensitive adhesive materials; protective materials for components of liquid crystal displays and the like; and molding materials for sheet shaped structures such as ion exchange membrane and ceramic green sheets.

### Description of Embodiments

Hereinafter, the present invention is described in detail.

The mold release film of the present invention includes a resin layer provided on one surface of a polyester film as the substrate, and the resin layer includes an acid-modified polyolefin resin, polyvinyl alcohol and a cross-linking agent.

In the present invention, the polyester constituting the polyester film is a linear saturated polyester synthesized from an aromatic dibasic acid or an ester-forming derivative of the aromatic dibasic acid and a diol or an ester-forming derivative of the diol.

Specific preferable examples of such a polyester include: polyesters such as polyethylene terephthalate, polyethylene isophthalate, polytetramethylene terephthalate, poly(1,4-cyclohexylene dimethylene terephthalate) and polyethylene-2,6-naphthalate, and the copolymers of these polyesters.

Examples of the component capable of constituting the copolymers are not particularly limited. Examples of the acid component include: dicarboxylic acids such as isophthalic acid, phthalic acid, 2,6-naphthalene dicarboxylic acid, sodium 5-sulfoisophthalate, oxalic acid, succinic acid, adipic acid, sebacic acid, azelaic acid, dodecanedioic acid, dimer acid, maleic anhydride, maleic acid, fumaric acid, itaconic acid, citraconic acid, mesaconic acid and cyclohexanedicarboxylic acid; and 4-hydroxybenzoic acid, ε-caprolactone and lactic acid.

Examples of the alcohol component include: ethylene glycol, diethylene glycol, 1,3-propanediol, neopentyl glycol, 1,6-hexanediol, cyclohexanedimethanol, triethylene glycol, polyethylene glycol, polypropylene glycol, polytetramethylene glycol, and ethylene oxide adducts of bisphenol A and bisphenol S.

Additionally, trifunctional compounds and the like such as trimellitic acid, trimesic acid, pyromellitic acid, trimethylolpropane, glycerin and pentaerythritol may also be used in small amounts.

These copolymerization components may be used in combinations of two or more thereof. Blends of two or more polyesters may also be used.

In the present invention, polyesters such as polyethylene terephthalate and polyethylene-2,6-naphthalate are particularly preferable.

The intrinsic viscosity of the polyester is preferably 0.55 to 0.80 and more preferably 0.60 to 0.75. When the intrinsic viscosity is less than the foregoing range, the breakage of the film tends to occur during production of a film, stable production of the film is difficult, and the strength of the obtained film is low. On the other hand, when the intrinsic viscosity exceeds the foregoing range, the shear heat is generated in a large amount during the melt extrusion of the resin in the production process of the film, the load exerted on the extruder is large, and the productivity of the film is degraded in such a way that the production rate has to be sacrificed and the control of the film thickness is made difficult. In the obtained film, thermally decomposed and gelled substances are increased, and thus surface defects, surface foreign substances and surface coarse protrusions are increased. The polyester having too high intrinsic viscosity involves a long polymerization time or a long polymerization process so as to be a factor to raise the cost.

Examples of the polymerization method of polyester include, without being particularly limited to, a transesterification method and a direct polymerization method. Examples of the transesterification catalyst include compounds such as the oxides and acetate of Mg, Mn, Zn, Ca, Li and Ti. Examples of the polycondensation catalyst include compounds such as oxides and acetates of Sb, Ti and Ge.

The polyester after the polymerization includes monomers, oligomers, and by-products such as acetaldehyde, and hence it is preferable to remove these by performing solid phase polymerization under reduced pressure or in an inert gas flow at a temperature equal to or higher than 200°C.

In the polymerization of polyester, if necessary, additives such as an antioxidant, a heat stabilizer, an ultraviolet absorber, an antistatic agent and a pinning agent can be added. Examples of the antioxidant include hindered phenol-based compounds and hindered amine-based compounds; examples of the heat stabilizer include phosphorus-based compounds; examples of the ultraviolet absorber include benzophenone-based compounds and benzotriazole-based compounds.

If no deviation occurs from the below-described preferable range of the surface roughness of the resin layer, a surface roughening substance may be included in the polyester, and the maximum particle size of the surface roughening substance is preferably 0.2 µm or less. Examples of the surface roughening substance include: particles of inorganic substances such as silicon dioxide, calcium carbonate, kaolinite, titanium dioxide and silica-alumina; and particles of organic substances such as silicone, polymethyl methacrylate and ethylvinylbenzene. The surface roughening substances can be used each alone or in combinations of two or more thereof.

The mold release film of the present invention includes as the substrate film thereof the polyester film constituted with the above-described polyester. Next, an example of the method for producing the polyester film is described specifically.

First, a sufficiently dried polyester is fed to an extruder, melted at a temperature equal to or higher than the temperature at which the polyester is sufficiently plasticized and exhibits fluidity, if necessary, allowed to pass through a selected filter, and then extruded through a T-die into a sheet shape. The resulting sheet is brought into close contact with a cooling drum regulated at a temperature equal to or lower than the glass transition temperature (Tg) of the polyester, to yield an unstretched film.

The obtained unstretched film is uniaxially oriented by a uniaxial stretching method, or biaxially oriented by a biaxial stretching method. Examples of the usable biaxial stretching method include, without being particularly limited to, a successive biaxial stretching method and a simultaneous biaxial stretching method.

In the uniaxial stretching method, the unstretched film is stretched in a temperature range from the Tg of the polyester to a temperature higher than the Tg of the polyester by 50°C, in the lengthwise direction or in the widthwise direction with a stretching magnification of approximately 2 to 6.

In the simultaneous biaxial stretching method, the unstretched film is biaxially stretched in a temperature range from the Tg of the polyester to a temperature higher than the Tg of the polyester by 50°C, both in the lengthwise direction and in the widthwise direction, with a stretching magnification of approximately 2 to 4 in each of both directions. Before the unstretched film is introduced into a simultaneous biaxial stretching machine, the unstretched film may be subjected to a preliminary longitudinal stretching with a stretching magnification of at most approximately 1.2.

In the successive biaxial stretching method, the unstretched film is heated with, for example, a heating roll or infrared ray and stretched in the lengthwise direction to yield a longitudinally stretched film. The stretching is preferably performed by taking advantage of the circumferential speed differences between two or more rolls, in a temperature range from the Tg of the polyester to a temperature higher than the Tg of the polyester by 40°C, with a magnification of 2.5 to 4.0. The longitudinally stretched film is successively, continuously and sequentially subjected to the treatments of transverse stretching in the widthwise direction, heat fixation, and thermal relaxation, to yield a biaxially oriented film. The transverse stretching is preferably started at a temperature falling within the range from the Tg of the polyester to a temperature higher than the Tg of the polyester by 40°C, and the maximum temperature is preferably a temperature lower than the melting pint (Tm) of the polyester by (100 to 40)°C. The magnification of the transverse stretching is regulated according to the physical properties required for the final film, is preferably 3.5 or more, or 3.8 or more, and more preferably 4.0 or more. The modulus of elasticity or the dimensional stability of the film can also be enhanced by further stretching again in the lengthwise direction and/or the widthwise direction after the stretching in the lengthwise direction and the stretching in the widthwise direction.

Following the stretching, a heat fixation treatment is preferably performed for a few seconds at a temperature lower than the Tm of the polyester by (50 to 10)°C, and at the same time as the heat fixation treatment, a relaxation of 1 to 10% is preferably performed in the widthwise direction of the film. After the heat fixation treatment, the film is cooled to a temperature equal to or lower than the Tg of the film to yield a biaxially stretched film.

A single layer film is obtained by the above-described production method; however, for the purpose of improving handleability while high smoothness is being achieved, the polyester film is preferably a multilayer film composed of two types of layers, and may also be a multilayer film obtained by laminating three or more types of layers.

When a multilayer film is used as the substrate polyester film, of the outer layers of the multilayer film, the layer having the resin layer provided thereon preferably does not contain the surface roughening substance. No inclusion of the surface roughening substance in the layer having the resin layer provided thereon results in a small surface roughness of the layer having the resin layer provided thereon, also causes no bleeding out of the surface roughening substance to the interface with the resin layer and to the resin layer surface, and can prevent the degradation of the adhesiveness between the resin layer and the substrate film and the contamination of the adherend at the time of peeling off.

In the foregoing production method, the multilayer film can be produced by, for example, a method in which the polyesters constituting the respective layers are separately melted and extruded through a multilayer die, and the resulting layers are laminated on and fused to each other before being solidified, then biaxially stretched and heat-fixed, or a method in which two or more types of polyesters are separately melted and extruded into films, and the resulting films are laminated on and fused to each other in a state of being unstretched or after stretching. From the viewpoint of the simplicity of the process, it is preferable that a multilayer die be used and the resulting layers be laminated on and fused to each other before being solidified.

The mold release film of the present invention includes a resin layer provided on one surface of the polyester film, and the resin layer includes an acid-modified polyolefin resin, polyvinyl alcohol and a cross-linking agent.

The acid-modified polyolefin resin included in the resin layer is a resin mainly composed of an olefin component, and modified with an acid-modifying component.

The olefin component constituting the acid-modified polyolefin resin preferably includes ethylene and/or propylene, and may further include butene.

Examples of the acid-modifying component constituting the acid-modified polyolefin resin include unsaturated carboxylic acid components, and specifically include acrylic acid, methacrylic acid, maleic acid, maleic anhydride, itaconic acid, itaconic anhydride, fumaric acid and crotonic acid, and additionally, half esters and half amides of unsaturated dicarboxylic acids. Among these, for the purpose of stably dispersing the resin in the below-described aqueous dispersion preparation of a resin, acrylic acid, methacrylic acid, maleic acid and maleic anhydride are preferable, and acrylic acid, methacrylic acid and maleic anhydride are particularly preferable. Two or more of the acid-modifying components may be included in the acid-modified polyolefin resin.

The proportion of the acid-modifying component in the acid-modified polyolefin resin is required to be 1 to 10% by mass and is preferably 2 to 9% by mass. When the proportion of the acid-modifying component is less than 1% by mass, the proportion of the polar groups in the acid-modified polyolefin resin included in the resin layer comes to be small, and hence no sufficient adhesiveness to the polyester film is obtained, and the adherend is sometimes contaminated; and additionally, in the below-described aqueous dispersion preparation of a resin, stable dispersion of the resin tends to be difficult. On the other hand, when the proportion of the acid-modifying component exceeds 10% by mass, the proportion of the polar groups is large, hence the adhesiveness between the resin layer and the polyester film comes to be sufficient, but at the same time, the adhesiveness between the resin layer and the adherend is also increased, and consequently, the mold releasability from the adherend tends to be degraded.

For the reason of further improving the adhesiveness to the polyester film, the acid-modified polyolefin resin preferably includes an ethylenically unsaturated component containing an oxygen atom in the side chain thereof.

Examples of the ethylenically unsaturated component containing an oxygen atom in the side chain thereof include the esterified products between (meth)acrylic acid and alcohols having 1 to 30 carbon atoms, and among others, from the viewpoint of easy availability, the esterified products between (meth)acrylic acid and alcohols having 1 to 20 carbon atoms. Specific examples of such compounds include: methyl (meth)acrylate, ethyl (meth)acrylate, propyl (meth)acrylate, butyl (meth)acrylate, hexyl (meth)acrylate, octyl (meth)acrylate, decyl (meth)acrylate, lauryl (meth)acrylate, dodecyl (meth)acrylate and stearyl (meth)acrylate. The mixtures of these may also be used. Among these, from the viewpoint of the adhesiveness to the polyester film, methyl (meth)acrylate, ethyl (meth)acrylate, butyl (meth)acrylate, hexyl acrylate and octyl acrylate are more preferable, ethyl acrylate and butyl acrylate are furthermore preferable, and ethyl acrylate is particularly preferable. Here, "a substituent name followed by (meth)acrylate" means "the substituent name followed by acrylate" or "the substituent name followed by methacrylate."

The ethylenically unsaturated component containing an oxygen atom in the side chain thereof has polar groups in the molecule thereof in the same manner as in the acid-modifying component. Accordingly, the inclusion of the ethylenically unsaturated component, containing an oxygen atom in the side chain thereof, in the acid-modified polyolefin resin increases the adhesiveness to the polyester film. However, the amount of the ethylenically unsaturated component containing an oxygen atom in the side chain thereof is too large, the properties of the resin, derived from olefin are lost, and there is a possibility of the degradation of the mold releasability with respect to the adherend. The proportion of the ethylenically unsaturated component containing an oxygen atom in the side chain thereof in the acid-modified polyolefin resin is preferably 1 to 40% by mass, more preferably 2 to 35% by mass, furthermore preferably 3 to 30% by mass and particularly preferably 6 to 18% by mass.

Even when the acid-modified polyolefin resin including the ethylenically unsaturated component containing an oxygen atom in the side chain thereof is used, nothing other than the adhesiveness to the polyester film impairs the mold releasability possessed by the resin layer.

In the acid-modified polyolefin resin, other monomers may also be copolymerized in small amounts. Examples of the other monomers include: dienes, (meth)acrylonitrile, vinyl halides, vinylidene halides, carbon monoxide and sulfur dioxide.

The respective components constituting the acid-modified polyolefin resin may be copolymerized in the acid-modified polyolefin resin, and the forms of the copolymerization are not limited. Examples of the state of the copolymerization include random copolymerization, block copolymerization and graft copolymerization (graft modification).

The melting point of the acid-modified polyolefin resin is preferably 80 to 200°C and more preferably 90 to 150°C. When the melting point exceeds 200°C, a high-temperature treatment is sometimes required during the formation of the resin layer on the surface of the polyester film. On the other hand, when the melting point is lower than 80°C, the mold releasability is degraded.

The Vicat softening point of the acid-modified polyolefin resin is preferably 50 to 180°C, more preferably 53 to 120°C and furthermore preferably 55 to 110°C. When the Vicat softening point is lower than 50°C, the resin layer formed on the polyester film tends to be melted, and hence the adhesiveness to the adherend is increased and the mold releasability is degraded. On the other hand, when the Vicat softening point exceeds 180°C, a treatment at a high temperature is required during the formation of the resin layer on the surface of the polyester film.

The melt flow rate (MFR) of the acid-modified polyolefin resin, at 190°C under a load of 2160 g, is preferably 1 to 1000 g/10 min, more preferably 1 to 500 g/10 min and furthermore preferably 1 to 100 g/10 min. When the melt flow rate is less than 1 g/10 min, the production of the below-described aqueous dispersion excellent in dispersion stability comes to be difficult. On the other hand, when the melt flow rate exceeds 1000 g/10 min, the adhesiveness between the resin layer and the polyester film is sometimes degraded.

Examples of the acid-modified polyolefin resin usable in the present invention include commercially available products: acid-modified polyolefin resins manufactured by Du Pont-Mitsui Polychemicals Co., Ltd., Nucrel Series "AN42115C," "N1050H" and "N1110H;" an acid-modified polyethylene resin manufactured by Japan Polyethylene Corp., Rexpearl Series "A210K;" and "Umex 1011" manufactured by Sanyo Chemical Industries, Ltd.

Examples of the acid-modified polyolefin resin including the ethylenically unsaturated component containing an oxygen atom in the side chain thereof include commercially available products: the maleic anhydride-modified polyolefin resins manufactured by Arkema Inc., Bondine Series "LX-4110," "HX-8210," "HX-8290" and "TX-8030."

In the present invention, the resin layer is required to include polyvinyl alcohol, along with the acid-modified polyolefin resin. In the resin layer, the dispersion of polyvinyl alcohol in the acid-modified polyolefin resin improves the mold releasability possessed by the acid-modified polyolefin resin and the cross-linking agent, and at the same time, allows the adhesiveness to the polyester film possessed by polyvinyl alcohol itself to be exhibited.

Examples of the type of polyvinyl alcohol include, without being particularly limited to: a product obtained by completely or partially saponifying a polymer of a vinyl ester.

Polyvinyl alcohol is preferably provided with water solubility for the case where polyvinyl alcohol is used as a liquid material as described below.

The average degree of polymerization of polyvinyl alcohol is, for example, without being particularly limited to, 300 to 5,000, and is preferably 300 to 2,000 from the viewpoint of the stability improvement of the liquid material for forming the resin layer.

The content of polyvinyl alcohol is required to exceed 200 parts by mass and to be 1000 parts by mass or less in relation to 100 parts by mass of the acid-modified polyolefin resin. When the content of polyvinyl alcohol is 200 parts by mass or less, the mold releasability with respect to rubber-based adherends tends to be poor, and when the content of polyvinyl alcohol exceeds 1000 parts by mass, the viscosity of the liquid material for forming the resin layer comes to be high, the coating unevenness tends to occur and gel is sometimes caused to occur. The content of polyvinyl alcohol is preferably 210 to 500 parts by mass and more preferably 300 to 400 parts by mass.

In the present invention, commercially available products can be used as polyvinyl alcohol; examples of such commercially available products include: "JC-05," "VC-10," "ASC-05X" and "UMR-10HH" of "J-Poval" manufactured by Japan Vam & Poval Co., Ltd.; "PVA-103" and "PVA-105" of "Kuraray Poval" and "AQ4104" and "HR3010" of "Exceval" manufactured by Kuraray Co., Ltd.; and "PC-1000" and "PC-2000" of "Denka Poval" manufactured by Denki Kagaku Kogyo K.K.

In the present invention, the resin layer is required to include a cross-linking agent, along with the acid-modified polyolefin resin and polyvinyl alcohol. The inclusion of the cross-linking agent allows the constituent components of the resin layer to be cross-linked with each other to improve the cohesive force of the resin layer, thus allows the constituent components to hardly migrate into the adherend, and allows the water resistance to be improved.

The addition amount of the cross-linking agent, in relation to 100 parts by mass of the acid-modified polyolefin resin, is required to be 1 to 20 parts by mass, and is preferably 2 to 15 parts by mass and more preferably 2 to 10 parts by mass. When the addition amount of the cross-linking agent is less than 1 part by mass, the cohesive force of the resin layer is made weak, the resin layer tends to migrate into the adherend, and when the addition amount of the cross-linking agent exceeds 20 parts by mass, the reaction sometimes occurs between the resin layer and the adherend to make the mold releasability poor.

As the cross-linking agent, for example, compounds having in the molecules thereof a plurality of functional groups capable of reacting with carboxyl groups can be used; among these compounds, for example, isocyanate compounds, melamine compounds, urea compounds, epoxy compounds, carbodiimide compounds and oxazoline compounds are preferable, and in particular, carbodiimide compounds and oxazoline compounds are effective. These cross-linking agents may also be used in combinations with each other.

The carbodiimide compound used as the cross-linking agent is not particularly limited as long as the carbodiimide compound includes in the molecule thereof one or more carbodiimide groups. The carbodiimide compound forms esters in one carbodiimide moiety, with the two carboxyl groups in the acid-modified moieties of the acid-modified polyolefin resin, to achieve cross-linking.

Specific examples of the carbodiimide compound include: carbodiimide group-containing compounds such as p-phenylene-bis(2,6-xylylcarbodiimide), tetramethylene-bis(t-butylcarbodiimide) and cyclohexane-1,4-bis(methylene-t-butylcarbodiimide); and polycarbodiimide that is a polymer having carbodiimide groups. One or two or more of these compounds can be used. Preferable among these is polycarbodiimide from the viewpoint of easy handleability.

Examples of the commercially available polycarbodiimide include the Carbodilite series manufactured by Nisshinbo Holdings Inc.; specifically, examples of the Carbodilite series include: watersoluble-type polycarbodiimides such as "SV-02," "V-02," "V-02-L2" and "V-04"; emulsion-type polycarbodiimides such as "E-01" and "E-02"; organic solution-type polycarbodiimides such as "V-01," "V-03," "V-07" and "V-09"; and non-solvent-type polycarbodiimides such as "V-05."

The oxazoline compound used as the cross-linking agent is not particularly limited as long as the oxazoline compound has two or more oxazoline groups in the molecule thereof. The oxazoline compound forms an amide ester in each of the two oxazoline moieties, with one carboxyl group in the acid-modified moieties of the acid-modified polyolefin resin, to achieve cross-linking.

Specific examples of the oxazoline compound include: oxazoline group-containing compounds such as 2,2'-bis(2-oxazoline), 2,2'-ethylene-bis(4,4'-dimethyl-2-oxazoline), 2,2'-p-phenylene-bis(2-oxazoline) and bis(2-oxazolinylcyclohexane) sulfide; and oxazoline group-containing polymers. One or two or more of these compounds can be used. Preferable among these are oxazoline group-containing polymers from the viewpoint of easy handleability.

Examples of the commercially available oxazoline group-containing polymers include the Epocros series manufactured by Nippon Shokubai Co., Ltd.; specifically, examples of the Epocros series include: water-soluble-type polymers such as "WS-500" and "WS-700;" and emulsion-type polymers such as "K-1010E," "K-1020E," "K-1030E," "K-2010E," "K-2020E" and "K-2030E."

In the present invention, the resin layer may include a lubricant within a range not impairing the advantageous effects of the present invention. Examples of the lubricant include: inorganic particles of the compounds such as calcium carbonate, magnesium carbonate, calcium oxide, zinc oxide, magnesium oxide, silicon oxide, sodium silicate, aluminum hydroxide, iron oxide, zirconium oxide, barium sulfate, titanium oxide, tin oxide, antimony trioxide, carbon black and molybdenum disulfide; organic particles of the compounds such as acrylic cross-linked polymers, styrene-based cross-linked polymers, silicone resin, fluororesin, benzoguanamine resin, phenolic resin, nylon resin and polyethylene wax; and surfactants.

The resin layer in the present invention includes, in addition to the acid-modified polyolefin resin, a specific amount of polyvinyl alcohol and a specific amount of a cross-linking agent, and consequently has excellent mold releasability with respect to rubber-based adherends as well as acrylic adherends. Specifically, the peel force between the resin layer and the adherend measured by bonding the rubber-based adherend to the resin layer can be made to be 0.5 N/cm or less, preferably 0.3 N/cm or less and furthermore preferably 0.2 N/cm or less. When the peel force exceeds 0.5 N/cm, unexpected and unnecessary patterns sometimes occur on the surface of the adherend after peeling off.

In the present invention, the thickness of the resin layer is preferably 0.01 to 1 µm, more preferably 0.03 to 0.7 µm and furthermore preferably 0.05 to 0.5 µm. When the thickness of the resin layer is less than 0.01 µm, no sufficient mold releasability is obtained, and when the thickness of the resin layer exceeds 1 µm, the mold releasability is saturated without being improved, and moreover, the cohesive force is degraded and the resin layer tends to migrate into the adherend.

In the present invention, the surface roughness SRz of the resin layer is preferably 1.5 µm or less. When the SRz exceeds 1.5 µm, such an SRz offers causes for the defects of the adherend, and the mold release film sometimes does not meet the requirements as a smooth film for mold release. The surface roughness SRz is a ten-point average roughness, and is the sum of the average value of the absolute values of the heights of the five points including from the highest summit to the fifth-highest summit in height in the interval of the reference length and the average value of the absolute values of the depths of the five points including from the deepest valley bottom to the fifth-deepest valley bottom, and the surface roughness SRz represents the magnitude of irregularities in the height direction.

Additionally, the surface roughness SRa of the resin layer is preferably 30 nm or less. When the SRa exceeds 30 nm, the mold release film sometimes does not meet the requirements as the smooth film for electric insulating material. The surface roughness SRa is the mean deviation of roughness, is the average value of the absolute values of the heights and depths of the tops and valleys in the interval of the reference length on the film surface, in an interval of a reference length, in relation to the average value of the roughness curve in the interval, and is an evaluation of the roughness defined by the heights and the quantities of the tops and valleys.

The method for achieving the surface roughness is not particularly limited; however, it is desirable that any surface roughening substance be substantially not included in the layer in which the resin layer of the substrate polyester film is disposed. No substantial inclusion means that the surface roughening substance is not added intentionally.

In the present invention, the resin layer can be industrially simply formed by a method in which a liquid material including an acid-modified polyolefin resin, polyvinyl alcohol and a cross-linking agent in a liquid medium is applied to a polyester film, and the polyester film including the liquid material applied thereto is dried, stretched and heat treated.

In the present invention, the liquid medium constituting the liquid material for forming the resin layer is preferably an aqueous medium. The aqueous medium means a solvent including water and an amphiphilic organic solvent and having a content of water of 2% by mass or more, and may also be a solvent composed only of water.

The amphiphilic organic solvent means an organic solvent for which the solubility of water at 20°C is 5% by mass or more (The solubilities of water at 20°C in organic solvents are described in the documents such as "Handbook of Solvents" (10th Ed., Kodansha Scientific, 1990)).

Specific examples of the amphiphilic organic solvent may include: alcohols such as methanol, ethanol, n-propanol and isopropanol; ethers such as tetrahydrofuran and 1,4-dioxane; ketones such as acetone and methyl ethyl ketone; esters such as methyl acetate, n-propyl acetate, isopropyl acetate, methyl propionate, ethyl propionate and dimethyl carbonate; derivatives of ethylene glycol such as ethylene glycol n-butyl ether; additionally, ammonia and organic amine compounds such as diethylamine, triethylamine, diethanolamine, triethanolamine, N,N-dimethyl ethanolamine and N,N-diethyl ethanolamine; and lactams such as 2-pyrrolidone and N-methyl-2-pyrrolidone.

The liquid material for forming the resin layer can be prepared by adding polyvinyl alcohol and a cross-linking agent to a liquid material of the acid-modified polyolefin resin.

As the liquid material of the acid-modified polyolefin resin, an aqueous dispersion of the acid-modified polyolefin resin can be used. Examples of the method for dispersing the acid-modified polyolefin resin in an aqueous medium include, without being particularly limited to, a method described in International Publication No. WO 02/055598.

From the viewpoint of the stability at the time of mixing with other components and the storage stability after mixing, the dispersed particle size of the acid-modified polyolefin resin in an aqueous medium is, in terms of the number-average particle size, preferably 1 µm or less and more preferably 0.8 µm or less. Such a particle size can be attained by the production method described in International Publication No. WO 02/055598. The number average particle size of the acid-modified polyolefin resin is measured by a dynamic light scattering method.

The solid content concentration of the aqueous dispersion of the acid-modified polyolefin resin is, without being particularly limited to, preferably 1 to 60% by mass and more preferably 5 to 30% by mass, for the purpose of appropriately maintaining the viscosity of the aqueous dispersion.

The solid content concentration of the liquid material for forming the resin layer obtained by mixing the aqueous dispersion of the acid-modified polyolefin resin, polyvinyl alcohol and a cross-linking agent can be appropriately selected according to, for example, the lamination conditions, the intended thickness and the intended performances, and is not particularly limited. However, the solid content concentration of the liquid material for forming the resin layer is preferably 2 to 30% by mass and more preferably 3 to 20% by mass for the purpose of maintaining the viscosity of the liquid material at an appropriate value and forming a uniform resin layer.

To the liquid material for forming the resin layer, additives such as an antioxidant, an ultraviolet absorber, a lubricant and a colorant can be added, within ranges not impairing the performances of the liquid material.

In the present invention, examples of the method for applying the liquid material for forming the resin layer to a polyester film may include heretofore known methods such as gravure roll coating, reverse roll coating, wire bar coating, lip coating, air knife coating, curtain flow coating, spray coating, immersion coating and brush coating.

In the present invention, it is necessary to include the step of applying the liquid material for forming the resin layer during the production process of the polyester film, and the steps of drying, orientation-stretching and heat-fixation-treating the liquid material for forming the resin layer along with the polyester film. The application during the production process allows the resin layer to be formed in a state of being small in the orientational crystallization degree of the polyester film surface, and hence the adhesive force between the polyester film and the resin layer is improved. In this way of application, the resin layer can be heat treated at a higher temperature with the polyester film being in a tense state, and hence the mold releasability and the residual adhesive force can be improved without degrading the quality of the polyester film. Moreover, in this way of application, as compared to offline application, the production process can be simplified, and is additionally advantageous with respect to the cost because of forming a thinner resin layer. When a successive biaxial stretching method is adopted, the following sequence of operations are preferably performed because of the reasons related to simplicity and operations: the foregoing liquid material is applied to a polyester film stretched in a uniaxial direction; the polyester film including the liquid material applied thereto is dried; and then the polyester film is further stretched in a direction perpendicular to the foregoing direction and heat treated.

The resin layer constituting the mold release film of the present invention causes no contamination both in the processing steps and in the adherend, and even when the mold release film of the present invention is wound in a form of a roll, the opposite surface to the surface provided with the resin layer is not contaminated by the resin layer. When the opposite surface to the surface provided with the resin layer is contaminated by the resin layer, the contact angle of the opposite surface is increased. Specifically, the contact angle of water on the surface of the substrate polyester film is 60 to 70°, the contact angle on the resin layer surface is 90 to 100°; when the opposite surface to the surface provided with the resin layer is contaminated by the resin layer, the contact angle on the opposite surface is increased from 60 to 70° and approaches 90 to 100°. In the present invention, the resin layer does not cause contamination, and hence, even when the mold release film is wound in a form of a roll, the contact angle of water on the opposite surface to the surface provided with the resin layer can be made to be 80° or less. When the contact angle on the opposite surface is 80° or less, the opposite surface of the film can be regarded as not being contaminated; when the contact angle exceeds 80°, the opposite surface of the film is contaminated, and the processing steps are possibly contaminated. Accordingly, when a processing such as a lamination treatment is applied to the opposite surface to the surface provided with the resin layer, the contact angle of water on the opposite surface is preferably 80° or less and more preferably 75° or less.

### Examples

Hereinafter, the present invention is described specifically with reference to Examples, but the present invention is not limited by these Examples. The properties of the mold release film were measured by the following methods.

### (1) Peel Force for Rubber-Based Adherend

The obtained mold release film was cut to a 10-cm square, the cut-out square piece was bonded to a paper pipe of 10.5 cm in outer diameter, and the rubber-based adherend prepared by the following method was bonded thereover in such a way that the rubber layer of the rubber-based adherend was brought into contact with the resin layer of the mold release film. Thereover, a polyester film (PET-12, manufactured by Unitika Ltd.) was wound in a length of 2000 m, under the conditions that the winding tension was 118 N/m, the winding contact pressure was 118 N/m and the winding speed was 100 m/min, and was allowed to stand still at 60°C for 3 days, in a hot air dryer. After the completion of the compression bonding, the paper pipe with the bonded adherend and wound film was cooled, the wound polyester film of the outer layer was removed, and a sample in which the mold release film and the rubber-based adherend were in a state of being bonded to each other was taken out.

The sample regulated in moisture at 23°C and 50% RH for 2 hours or more was cut to a width of 15 mm, and then the peel resistance between the resin layer of the mold release film and the rubber-based adherend was measured by using the Autograph manufactured by Shimadzu Corp. Specifically, the mold release film was fixed to the upper chuck, the rubber-based adherend was fixed to the lower chuck; the peel resistance was measured under the conditions that the unpeeled portion of the mold release film was bent toward the rubber-based adherend so as for the mold release film to form a straight line, and the peeling off was performed at a speed of 300 mm/min. The average value of the results obtained by five runs of measurement was taken as the peel force.

### <Preparation of Rubber-Based Adherend>

As a rubber layer, a resin mixture composed of 45 parts by mass of a styrene-butadiene copolymer ("Clearen" manufactured by Denki Kagaku Kogyo K.K., styrene/butadiene = 30/70 (mass ratio)), 45 parts by mass of a polyolefin resin ("Tafmer" manufactured by Mitsui Chemicals, Inc.) and 10 parts by mass of an impact resistant polyethylene ("HI-E6" manufactured by Toyo Styrene Co., Ltd.) was used; as a support layer, a resin mixture composed of 60 parts by mass of a polyolefin resin ("Tafmer" manufactured by Mitsui Chemicals, Inc.) and 40 parts by mass of a low density polyethylene ("UBE Polyethylene" manufactured by Ube Industries, Ltd.) was used; by using these resin mixtures, with a T-die coextrusion method, a two-layer film (rubber layer thickness: 10 µm, support layer thickness: 20 µm) having a total thickness of 30 µm was prepared. In this case, the film extruded from the T-die was taken out by clamping with a silicone rubber mat roll (support layer side) and a metal cooling roll (rubber layer side) for which the average surface roughness was regulated to be 0.8 µm.

A 16-µm-thick biaxially stretched polyethylene terephthalate film ("Emblet S-16" manufactured by Unitika Ltd.) was used as the substrate layer, the two-layer film was extrusion laminated on the substrate layer by using the support layer side surface as the lamination surface, through the intermediary of a melt-extruded low density polyethylene, and thus a rubber-based adherend (rubber layer/support layer/low density polyethylene/substrate layer) was prepared.

### (2) Peel Force for Acrylic Adherend

Onto the resin layer of the obtained mold release film, a pressure-sensitive adhesive polyester tape (No. 31B/acrylic pressure-sensitive adhesive, manufactured by Nitto Denko Corp.) of 50 mm in width and 150 mm in length was compression-bonded with a rubber roll to prepare a sample. The sample was interposed in a form of metal plate/rubber plate/sample/rubber plate/metal plate, allowed to stand under a load of 2 kPa, in an atmosphere of 70°C for 20 hours, and then cooled for 30 minutes or more so as to get back to normal temperature, and thus a sample for peel strength measurement was obtained. The peel strength between the pressure-sensitive adhesive tape and the mold release film of the sample for peel strength measurement was measured in a thermostatic room set at 25°C with a tensile tester (Precision Universal Material Tester Model 2020, manufactured by Intesco Co., Ltd.). The peel angle was set at 180 degrees and the peel speed was set at 300 mm/min.

### (3) Contact Angle

A roll formed by winding the obtained mold release film was allowed to stand still in an environment at 40°C for 3 days. After completion of the treatment, the roll was cooled, the surface layer film was removed, and for each of the resin layer side surface and the opposite surface to the resin layer side surface, in the mold release film portion at a position separated by 50 m from the winding core, the contact angle with water was measured with a liquid drop method. Specifically, in an environment at 20°C and 65% RH, by using the contact angle meter CA-D manufactured by Kyowa Interface Science Co., Ltd., a drop of pure water was placed at a prescribed area in the meter so as to have a diameter of 2.0 mm, and the contact angle after the elapsed time of 10 seconds was measured. The average value of the results obtained by five runs of measurement was adopted.

### (4) Surface Roughness

By using the Talysurf CCI 6000 manufactured by Taylor Hobson Ltd., the surface roughness SRa (standard deviation, nm) and the surface roughness SRz (ten-point average roughness, µm) were measured under the following conditions, and averaged over 10 points.
Measurement lengths: 0.66 mm × 0.66 mm
Cutoff: Robust Gaussian filter, 0.25 mm

The acid-modified polyolefin resin aqueous dispersion for preparing the liquid material for forming the resin layer was produced by the following method.

### <Production of PE-Based Acid-Modified Polyolefin Resin Aqueous Dispersion O-1>

By using a stirrer equipped with a hermetically sealable, pressure-proof 1-liter volume glass vessel with a heater attached thereto, 60.0 g of an acid-modified polyolefin resin (Bondine LX-4110, ethylene/ethyl acrylate/maleic anhydride = 91/7/2 (% by mass), MFR: 5 g/10 min, melting point: 107°C, Vicat softening point: 83°C, manufactured by Arkema Inc.), 90.0 g of isopropanol (IPA), 3.0 g of N,N-dimethylethanolamine (DMEA, 1.0 equivalent in relation to the carboxyl group of the maleic anhydride unit in the resin) and 147.0 g of distilled water were placed in the glass vessel, and the resulting mixture was stirred for 60 minutes by setting the rotation speed of the stirrer blades at 300 rpm and maintaining the temperature in the system at 140 to 145°C. Subsequently, the glass vessel was immersed in a water bath, and the mixture was cooled down to room temperature (approximately 25°C) while being stirred at a rotation speed still set at 300 rpm. Then, for the purpose of removing the organic solvent from the aqueous medium, the aqueous medium was partially distilled off by using a rotary evaporator, while water was being added, at the bath temperature set at 80°C. Subsequently, the mixture was cooled by air cooling down to room temperature (25°C), and then, the mixture was filtered under pressure (air pressure: 0.2 MPa) with a 300-mesh stainless steel filter (wire diameter: 0.035 mm, plain weave). Thus, a milk-white uniform acid-modified polyolefin resin aqueous dispersion O-1 (solid content concentration: 20% by mass, IPA: 0% by mass, DMEA: 0.9% by mass) was obtained. The number average particle size was 80 nm.

### <Production of PP-Based Acid-Modified Polyolefin Resin Aqueous Dispersion O-2>

In a four-necked flask, in a nitrogen atmosphere, 280 g of a propylene-butene-ethylene ternary copolymer (Vestoplast 708, propylene/butene/ethylene = 64.8/23.9/11.3 (% by mass), manufactured by Huels Japan Ltd.) was heated and melted, then, 32.0 g of maleic anhydride as an unsaturated carboxylic acid and 6.0 g of dicumyl peroxide as a radical generator were respectively added to the molten copolymer over 1 hour under stirring while the reaction system temperature was being maintained at 170°C, and then the reaction mixture was allowed to react for 1 hour. After completion of the reaction, the obtained reaction product was placed in a large amount of acetone to precipitate the resin. The resin was further washed with acetone several times to remove the unreacted maleic anhydride, and then dried under reduced pressure in a reduced pressure dryer to yield an acid-modified polyolefin resin (propylene/butene/ethylene/maleic anhydride = 60.3/22.2/10.5/7.0 (% by mass), MFR: 50 g/10 min, melting point: 135°C).

By using a stirrer equipped with a hermetically sealable, pressure-proof 1-liter volume glass vessel with a heater attached thereto, 60.0 g of the resulting acid-modified polyolefin resin, 45.0 g of ethylene glycol-n-butyl ether (Bu-EG), 6.9 g of DMEA (1.0 equivalent in relation to the carboxyl group of the maleic anhydride unit in the resin) and 188.1 g of distilled water were placed in the glass vessel, and the resulting mixture was stirred by setting the rotation speed of the stirrer blades at 300 rpm. Consequently, no precipitate of the resin was found at the vessel bottom, and the resin was verified to be in a suspended state. Then, while this state was being maintained, the mixture was heated after an elapsed time of 10 minutes by turning on the power source of the heater. Then, while the system temperature was being maintained at 140°C, the mixture was further stirred for 60 minutes. Subsequently, the mixture was cooled by air cooling down to room temperature (approximately 25°C) while being stirred at a rotation speed still set at 300 rpm. Then, for the purpose of removing the organic solvent from the aqueous medium, the aqueous medium was partially distilled off by using a rotary evaporator, while water was being added, at the bath temperature set at 80°C. Subsequently, the mixture was cooled by air cooling down to room temperature (25°C), and then, the mixture was filtered under pressure (air pressure: 0.2 MPa) with a 300-mesh stainless steel filter (wire diameter: 0.035 mm, plain weave), and thus, a milk-white uniform acid-modified polyolefin resin aqueous dispersion 0-2 (solid content concentration: 20% by mass, Bu-EG: 0% by mass, DMEA: 1.0% by mass) was obtained. The number average particle size was 100 nm. On the filter, the residual resin was little found.

### <Production of PP-Based Acid-Modified Polyolefin Resin Aqueous Dispersion O-3>

By using a stirrer equipped with a hermetically sealable, pressure-proof 1-liter volume glass vessel with a heater attached thereto, 60.0 g of an acid-modified propylene resin (Umex 1001, propylene/maleic anhydride = 97.7/2.3 (% by mass), acid value: 26 mg KOH/g, MFR: 65 g/10 min (result measured at 160°C), melting point: 153°C, manufactured by Sanyo Chemical Industries, Ltd.), 6.3 g of DMEA, 60 g of IPA and 174 g of distilled water were placed in the glass vessel, the glass vessel was sealed, and then the resulting mixture was heated to 160°C (the temperature inside the glass vessel) while the mixture was being stirred at 300 rpm. The mixture was maintained at 160°C for 1 hour under stirring, and then the power source of the heater was turned off to spontaneously cool the mixture down to room temperature under stirring; after cooling, for the purpose of removing the organic solvent from the aqueous medium, the aqueous medium was partially distilled off by using a rotary evaporator, while water was being added, at the bath temperature set at 80°C. Subsequently, the mixture was cooled by air cooling down to room temperature (25°C), and then, the mixture was filtered under pressure (air pressure: 0.2 MPa) with a 300-mesh stainless steel filter (wire diameter: 0.035 mm, plain weave), and thus, a milk-white uniform acid-modified polyolefin resin aqueous dispersion 0-3 (solid content concentration: 20% by mass, IPA: 0% by mass, DMEA: 2.0% by mass) was obtained. The number average particle size was 90 nm.

### <Production of PE-Based Acid-Modified Polyolefin Resin Aqueous Dispersion O-4>

A milk-white uniform acid-modified polyolefin resin aqueous dispersion 0-4 (solid content concentration: 20% by mass, IPA: 30% by mass, DMEA: 1.0% by mass) was obtained in the same manner as in the production of the acid-modified polyolefin resin aqueous dispersion O-1 except that the removal of the organic solvent by use of a rotary evaporator, performed in the production of the acid-modified polyolefin resin aqueous dispersion O-1 was not performed. The number average particle size was 80 nm.

### Example 1

### <Production of Liquid Material U-10 for Forming Resin Layer>

The aqueous dispersion O-1, a polyvinyl alcohol aqueous solution (VC-10, average degree of polymerization: 1,000, solid content concentration: 10% by mass, manufactured by Japan Vam & Poval Co., Ltd.) and an oxazoline compound aqueous solution (Epocros WS-700, solid content concentration: 25% by mass, manufactured by Nippon Shokubai Co., Ltd.) were mixed in such a way that the solid content mass ratio between the respective components was 100:300:5, then the resulting mixture was diluted with water, and thus a liquid material U-10 having a solid content concentration of 8% by mass was obtained.

### <Production of Mold Release Film>

A resin for forming a layer A was prepared by placing and melting at 280°C a polyethylene terephthalate (UT-UBR, intrinsic viscosity: 0.62, glass transition temperature: 78°C, melting point: 255°C, manufactured by Nippon-Ester Co., Ltd.) in an extruder having a screw diameter of 90 mm, and a resin for forming a layer B was prepared by placing and melting at 280°C a polyethylene terephthalate (intrinsic viscosity: 0.62, glass transition temperature: 78°C, melting point: 255°C), including a silica particle (OSCAL (EN-5001SIV), particle size: 1.0 µm, manufactured by JGC Catalysts and Chemicals Ltd.) added so as to have a content of 0.030% by mass, in an extruder having a screw diameter of 65 mm; the molten resin for forming the layer A and the molten resin for forming the layer B were made to join together in a 2-layer feed block, extruded from a T-die outlet by regulating in such a way that the total thickness was 380 µm and the thickness ratio (layer A/layer B) was 22/3, and rapidly cooled and solidified, and thus an unstretched film composed of the layer A and the layer B was obtained.

The unstretched film was stretched with a magnification of 3.5 by using a roll-type longitudinal stretching machine under a condition of 85°C, then the liquid material U-10 for forming the resin layer was applied to the surface of the layer A with a 120-mesh gravure roll so as for the coating amount to be 2.7 g/m², and the stretched film coated with the liquid material U-10 was made to pass through a hot air drying furnace set at 50°C for a period of 20 seconds.

Subsequently, the film edges were continuously gripped with the clips of a flat-type stretching machine, the film was transversely stretched with a magnification of 4.5 under a condition of 100°C, then heat treated with a transverse relaxation rate of 3% at 200 to 210°C for 2 seconds or more, and subsequently heat treated at 230°C for 3 seconds, and thus there was obtained a mold release film in which a 0.05-µm-thick resin layer was provided on one surface of a 25-µm-thick biaxially stretched polyester film.

By using a contact pressure roll (maximum height SRmax was 7 µm) provided with hard chrome plating on the surface thereof, the obtained mold release film was wound around a paper pipe of 10.5 cm in outer diameter in a form of a roll having a film length of 500 m under the conditions that the width was 800 mm, the winding tension was 118 N/m, the winding contact pressure was 118 N/m and the winding speed was 100 m/min. The coefficient of friction of the contact pressure roll was 0.3 and the oblique angle of the film was set at 120°.

### Example 2

A mold release film was obtained in the same manner as in Example 1 except that a carbodiimide compound (Carbodilite SV-02, manufactured by Nisshinbo Holdings Inc.) was used as a cross-linking agent and the amount of the carbodiimide compound was set at 19 parts by mass in relation to 100 parts by mass of the acid-modified polyolefin resin.

### Examples 3 to 9 and Comparative Examples 1 to 4

In each of Examples 3 to 9 and Comparative Examples 1 to 4, a mold release film was obtained in the same manner as in Example 1 except that the type of the acid-modified polyolefin resin aqueous dispersion in the liquid material for forming the resin layer, and the parts by mass of polyvinyl alcohol and the parts by mass of the oxazoline compound in relation to 100 parts by mass of the acid-modified polyolefin resin were altered as described in Table 1.

### Comparative Examples 5 to 8

In each of Comparative Examples 5 to 8, a mold release film was obtained as follows: the liquid material for forming the resin layer having the composition described in Table 1 was applied by using a Meyer bar to a film wound in the same manner as in Example 1 except that no liquid material for forming the resin layer was applied, and then the film was dried at 120°C for 30 seconds to form a 0.2-µm-thick resin layer on the film, and subjected to aging at 50°C for 2 days to yield a mold release film.

### Comparative Example 9

A film roll was wound in the same manner as in Example 1 except that no liquid material for forming the resin layer was applied.

Table 1 shows the constitutions of the liquid materials for forming the resin layer used in Examples and Comparative Examples and the evaluation results of the obtained mold release films.

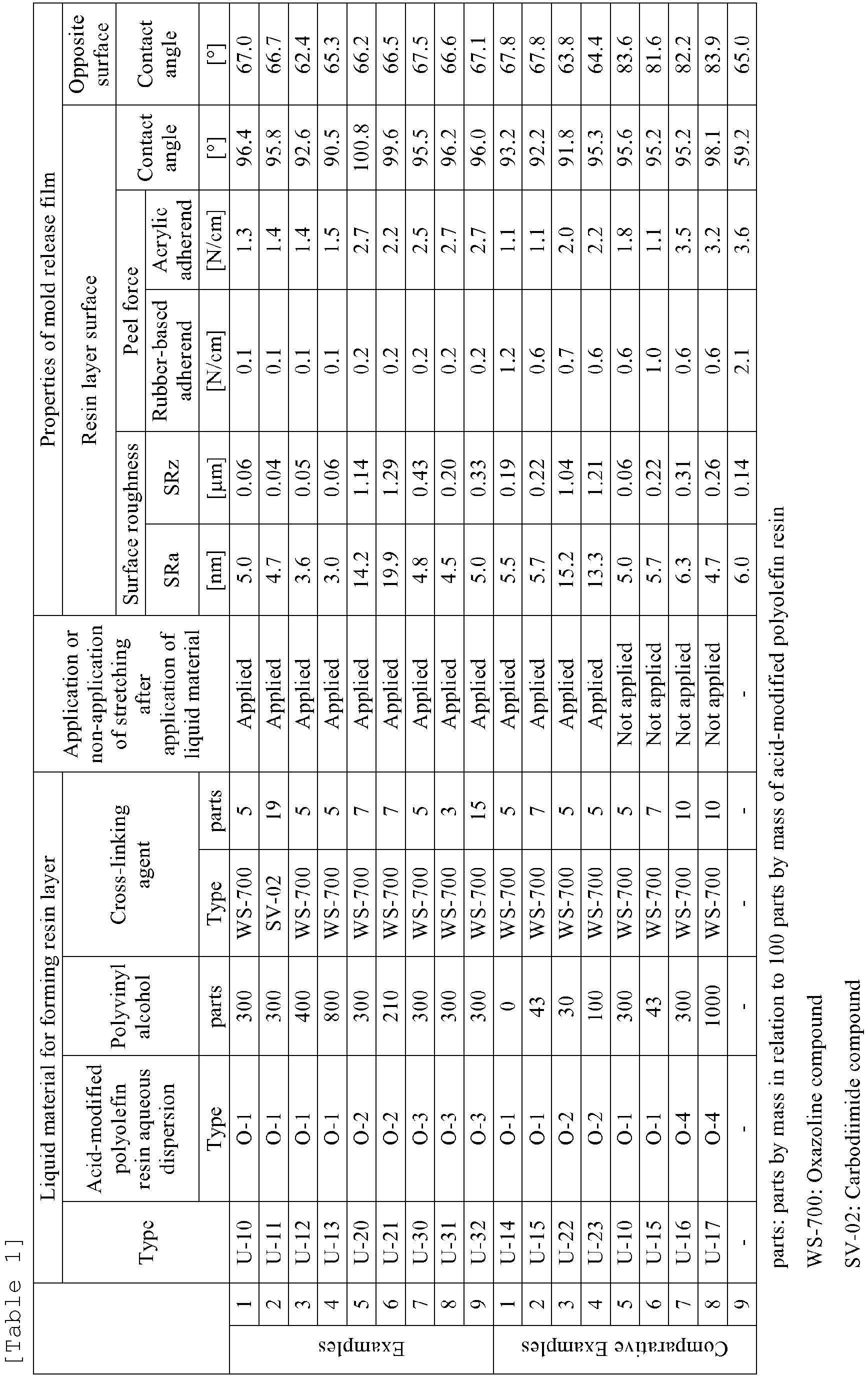

In each of Examples 1 to 9, the peel force between the resin layer and the rubber-based adherend was small and excellent mold releasability was exhibited. In each of Examples 1 to 9, in contrast to the contact angle of the resin layer being 90 to 100°, the contact angle of the opposite surface was 60 to 70°, to be equivalent to the contact angle of Comparative Example 9 in which no resin layer was provided; thus, the opposite surface of the mold release film was verified to be free from the occurrence of contamination.

In each of Comparative Examples 1 to 4, the contact angle of the opposite surface to the resin layer was equivalent to the corresponding contact angles in Examples 1 to 9, indicating that no contamination due to the resin layer occurred; however, because of the smaller content of polyvinyl alcohol, the peel force between the resin layer and the rubber-based adherend was large and the mold releasability was poor.

In each of Comparative Examples 5 to 8, because the resin layer was not heat treated at a high temperature under the condition that the polyester film was in a tense state, the mold releasability was low, and the peel force between the resin layer and the rubber-based adherend was large. In each of Comparative Examples 5 to 8, the contact angle of the opposite surface to the resin layer was 81.6 to 83.9°, to show a value closer to the contact angle of the resin layer surface being 90 to 100° than to the contact angle of the polyester resin surface being 60 to 70°, thus the opposite surface was contaminated by the resin layer, and hence the use of this mold release film may possibly cause the contamination of the processing steps.

In Comparative Example 9, no resin layer was provided, the peeling off of the rubber-based adherend required a large force, and unexpected and unnecessary patterns occurred on the surface of the adherend after peeling off.

## Claims

1. A mold release film comprising a resin layer provided on one surface of a polyester film,
wherein the resin layer includes an acid-modified polyolefin resin with a proportion of an acid-modifying component of 1 to 10% by mass, polyvinyl alcohol and a cross-linking agent;
a content of polyvinyl alcohol exceeds 200 parts by mass and is 1000 parts by mass or less, and a content of the cross-linking agent is 1 to 20 parts by mass in relation to 100 parts by mass of the acid-modified polyolefin resin; and
a peel force between the resin layer and a rubber-based adherend measured by bonding the rubber-based adherend to the resin layer is 0.5 N/cm or less.

2. The mold release film according to claim 1, wherein an olefin component of the acid-modified polyolefin resin comprises ethylene and/or propylene.

3. The mold release film according to claim 1 or 2, wherein a contact angle of water on an opposite surface to the surface provided with the resin layer is 80° or less.

4. A method for producing a mold release film, the production method being a method for producing the mold release film according to claim 1, and comprising:
applying to a polyester film a liquid material including an acid-modified polyolefin resin with a proportion of an acid-modifying component of 1 to 10% by mass, polyvinyl alcohol, a cross-linking agent and a liquid medium, a content of polyvinyl alcohol exceeding 200 parts by mass and being 1000 parts by mass or less and a content of the cross-linking agent being 1 to 20 parts by mass in relation to 100 parts by mass of the acid-modified polyolefin resin; and
drying, stretching and heat treating the polyester film including the liquid material applied thereto.

## Patentansprüche

1. Formtrennfilm, umfassend eine Harzschicht, die auf einer Oberfläche eines Polyesterfilms vorgesehen ist,
wobei die Harzschicht ein säuremodifiziertes Polyolefinharz mit einem Anteil einer säuremodifizierten Komponente von 1 bis 10 Masse-%, Polyvinylalkohol und ein Vernetzungsmittel umfasst;
ein Gehalt von Polyvinylalkohol höher als 200 Masseteile ist und 1000 Masseteile oder weniger beträgt, und ein Gehalt des Vernetzungsmittels 1 bis 20 Masseteile bezogen auf 100 Masseteile des säuremodifizierten Polyolefinharzes beträgt; und
eine Ablösekraft zwischen der Harzschicht und einem kautschukbasierten Schichtträger, gemessen durch Kleben des kautschukbasierten Schichtträgers an die Harzschicht, 0,5 N/cm oder weniger beträgt.

2. Formtrennfilm nach Anspruch 1, wobei die Olefinkomponente des säuremodifizierten Polyolefinharzes Ethylen und/oder Propylen umfasst.

3. Formtrennfilm nach Anspruch 1 oder 2, wobei ein Kontaktwinkel von Wasser auf einer gegenüberliegenden Oberfläche zu der mit der Harzschicht versehenen Oberfläche 80° oder weniger beträgt.

4. Verfahren zur Herstellung eines Formtrennfilms, wobei das Herstellungsverfahren ein Verfahren zur Herstellung des Formtrennfilms nach Anspruch 1 ist und umfasst:
Auftragen auf einen Polyesterfilm eines flüssigen Materials, das ein säuremodifiziertes Polyolefinharz mit einem Anteil einer säuremodifizierten Komponente von 1 bis 10 Masse-%, Polyvinylalkohol, ein Vernetzungsmittel und ein flüssiges Medium umfasst, wobei ein Gehalt von Polyvinylalkohol höher als 200 Masseteile ist und 1000 Masseteile oder weniger beträgt, und ein Gehalt des Vernetzungsmittels 1 bis 20 Masseteile bezogen auf 100 Masseteile des säuremodifizierten Polyolefinharzes beträgt; und
Trocknen, Strecken und Wärmebehandeln des Polyesterfilms, der das flüssige Material darauf aufgetragen aufweist.

## Revendications

1. Film de démoulage comprenant une couche de résine pourvue sur une surface d'un film de polyester,
dans lequel la couche de résine comprend une résine de polyoléfine modifiée par un acide avec une proportion de composant modificateur acide de 1 à 10 % en masse, un polyalcool vinylique et un agent de réticulation ;
une teneur en polyalcool vinylique excède 200 parties en masse et est inférieure ou égale à 1000 parties en masse, et une teneur en agent de réticulation est de 1 à 20 parties en masse par rapport à 100 parties en masse de la résine de polyoléfine modifiée par un acide ; et
une force de pelage entre la couche de résine et un support à base de caoutchouc mesurée en liant le support à base de caoutchouc à la couche de résine est inférieure ou égale à 0,5 N/cm.

2. Film de démoulage selon la revendication 1, dans lequel un composant oléfinique de la résine de polyoléfine modifiée par un acide comprend de l'éthylène et/ou du propylène.

3. Film de démoulage selon la revendication 1 ou 2, dans lequel un angle de contact de l'eau sur une surface opposée à la surface pourvue de la couche de résine est inférieur ou égal à 80°.

4. Procédé de production d'un film de démoulage, le procédé de production étant un procédé de production du film de démoulage selon la revendication 1, et comprenant :
l'application sur un film de polyester d'une substance liquide comprenant une résine de polyoléfine modifiée par un acide avec une proportion d'un composant modificateur acide de 1 à 10 % en masse, un polyalcool vinylique, un agent de réticulation et un milieu liquide, une teneur en polyalcool vinylique excédant 200 parties en masse et étant inférieure ou égale à 1000 parties en masse et une teneur en agent de réticulation étant de 1 à 20 parties en masse par rapport à 100 parties en masse de la résine de polyoléfine modifiée par un acide ; et
le séchage, l'étirement et le traitement thermique du film de polyester comprenant la substance liquide appliquée sur celui-ci.
